(19) **Europäisches Patentamt / European Patent Office / Office européen des brevets**

(11) **EP 1 893 965 B1**

(12) **EUROPÄISCHE PATENTSCHRIFT**

(45) Veröffentlichungstag und Bekanntmachung des Hinweises auf die Patenterteilung:
**21.11.2018 Patentblatt 2018/47**

(51) Int Cl.:
**G01M 3/20** [(2006.01)]

(21) Anmeldenummer: **06777266.5**

(22) Anmeldetag: **02.06.2006**

(86) Internationale Anmeldenummer:
**PCT/EP2006/062891**

(87) Internationale Veröffentlichungsnummer:
**WO 2006/136491 (28.12.2006 Gazette 2006/52)**

(54) **VERFAHREN ZUM KALIBRIEREN EINES MASSENSPEKTROMETRISCHEN SCHNÜFFELLECKSUCHERS**

METHOD FOR CALIBRATING A MASS SPECTROMETRIC SNIFFING LEAK DETECTOR

PROCEDE D'ETALONNAGE D'UN DETECTEUR RENIFLEUR DE FUITES A SPECTROMETRIE DE MASSE

(84) Benannte Vertragsstaaten:
**DE ES FR IT**

(30) Priorität: **21.06.2005 DE 102005028557**

(43) Veröffentlichungstag der Anmeldung:
**05.03.2008 Patentblatt 2008/10**

(73) Patentinhaber: **Inficon GmbH**
**50968 Köln (DE)**

(72) Erfinder:
- **ROLFF, Norbert**
  **50169 Horrem (DE)**
- **ROLFF, Randolf, Paul**
  **50169 Horrem (DE)**
- **GERDAU, Ludolf**
  **50189 Elsdorf (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
- **PATENT ABSTRACTS OF JAPAN Bd. 018, Nr. 596 (P-1825), 14. November 1994 (1994-11-14) -& JP 06 222044 A (NIPPON TELEGR & TELEPH CORP <NTT>), 12. August 1994 (1994-08-12)**
- **PATENT ABSTRACTS OF JAPAN Bd. 017, Nr. 653 (E-1469), 3. Dezember 1993 (1993-12-03) -& JP 05 217549 A (FUJITSU LTD; others: 01), 27. August 1993 (1993-08-27)**
- **UMRATH, WALTER; ADAM, HERMANN ET AL.: "Grundlagen der Vakuumtechnik" März 1997 (1997-03), UMRATH, WALTER , KOELN , XP002393047 Seite 94 - Seite 123 Absatz [4.5.2] - Absatz [4.5.6] Absatz [4.6AUSWERTUNG] - Absatz [4.7.1] Absatz [4.9WARTUNG] Absatz [5.5.2.3]**

**Beschreibung**

Die Erfindung betrifft ein Verfahren zum Kalibrieren eines spektrometrischen Schnüffellecksuchers für unterschiedliche zu detektierende Testgase unter Verwendung eines vorzugsweise aus einem Testleck austretenden definierten Kalibriergases.

Schnüffellecksucher werden dazu benutzt, ein aus einem auf Dichtheit zu prüfenden Behälter austretendes Testgas festzustellen. Ein typisches Anwendungsgebiet für Schnüffellecksucher sind Kühlschränke und Klimaanlagen, bei denen in einem gegen die Umgebung abgeschlossenen Kreislauf ein Kältemittel enthalten ist. Bei der Qualitätskontrolle soll ermittelt werden, ob der Kältemittelkreislauf dicht ist. Ein Schnüffellecksucher saugt Umgebungsluft an, die einem Gasdetektor zugeführt wird, welcher feststellt, ob Testgas in der angesaugten Luft enthalten ist. Das bloße Erkennen des Vorhandenseins von Testgas reicht in der Regel nicht aus. Man benötigt auch Informationen über die Menge des austretenden Testgases bzw. über die Größe des festgestellten Lecks.

Schnüffellecksucher enthalten als Gasdetektor ein Gastrenn-System, das das angesaugte Gasgemisch analysiert. Hierbei handelt es sich in der Regel um ein Massenspektrometer. Es kann aber auch ein Infrarot-Gasdetektor benutzt werden. Das Gastrenn-System ermittelt die in dem Gasgemisch enthaltenen Komponenten nach Massenzahl und zugehöriger Amplitude. Die Massenzahl gibt die Molekularmasse des Gases an. Viele Gase haben eine Kombination aus mehreren Peaks von unterschiedlichen Amplituden.

Es besteht der Wunsch, ein Lecksuchgerät für unterschiedliche festzustellende Testgase benutzen zu können. Hierbei muss eine Kalibrierung für jedes Testgas separat durchgeführt werden. US-A-6,263,724 beschreibt einen Gasanalysator mit einer Autokalibriervorrichtung. Ein Behälter, der ein kalibriertes Testleck aufweist, ist mit einer Mischung aus n Gasen, die unterschiedliche Massen aufweisen, gefüllt. Der partielle Leckfluss eines jeden der nGase des Gasgemisches ist bekannt. Für jedes dieser Gase wird die Massenzahl ermittelt. Mit einem derartigen Kalibrierverfahren erfolgt eine Kalibrierung nur für ausgewählte Gase. Soll das Lecksuchgerät später für andere Gase benutzt werden, ist eine Neukalibrierung unter Einschluss dieses Testgases als Kalibriergas erforderlich.

JP 06222044 A beschreibt ein Kalibrierverfahren für einen massenspektrometrischen Gaslecksucher, bei dem absolute Massen- und Amplitudenfehler korrigiert werden.

JP 05217549 A beschreibt ein Kalibrieren eines Quadrupol-Massenspektrometers, wobei eine Mischung aus einer Vielzahl von bestimmten Gasen zum Kalibrieren verwendet werden.

Walter Umrath, Hermann Adam et al., "Grundlagen der Vakuumtechnik", März 1997, Köln beschreibt ein Kalibrieren eines Massenspektrometers mit Partialdrücken.

Der Erfindung liegt die Aufgabe zugrunde, ein Verfahren zum Kalibrieren eines Schnüffellecksuchers anzugeben, das eine Prüfung auf zahlreiche Testgase ermöglicht, auch ohne dass diese Testgase bei dem Kalibrierverfahren eingesetzt wurden.

Das erfindungsgemäße Verfahren ist durch den Patentanspruch 1 definiert. Hiernach wird aus dem Kalibriergas, dessen Leckrate und Bruchstückverteilung bekannt ist, mindestens ein spektrometrischer Peak gemessen. Mit Hilfe dieser Messung wird ein Gerätefaktor ermittelt. Anhand der bekannten Bruchstückfaktoren anderer Gase und dem nun ermittelten Gerätefaktor kann die Amplitude dieser anderen Gase ermittelt werden.

Das erfindungsgemäße Verfahren bewirkt eine Kalibrierung mit Hilfe von vorzugsweise mehreren spektrometrischen Peaks, die durch ein Kalibriergas oder mehrere Kalibriergase hervorgerufen werden und definierte Spektralpositionen und Amplituden haben. Damit kann ein größerer Bereich der Skala der Spektralachse bzw. Gase abgedeckt werden. Die Erfindung geht davon aus, dass bei mehreren in Betracht kommenden Testgasen nicht für jedes Testgas eine eigene Kalibrierung erfolgen muss. Vielmehr wird die Kalibrierung mit mindestens einem ausgewählten Kalibriergas durchgeführt, wobei mindestens ein spektrometrischer Peak erzeugt wird. Da die Spektralpositionen des Kalibriergases bekannt sind, kann anhand der gemessenen Peaks bzw. eines gemessenen Peaks und des Nullpunkts eine Skala der Spektralachse erzeugt werden, in die die Spektralpositionen anderer Gase integriert werden können. Auf diese Weise entsteht für jeden Schnüffellecksucher bzw. jeden darin enthaltenen Gasdetektor eine kalibrierte Spektralachse, die für einen größeren Bereich von Spektralpositionen Gültigkeit hat.

Zusätzlich zur Erkennung eines Gases muss die Menge dieses Gases festgestellt werden, um eine Information über die Größe des detektierten Lecks zu erhalten. Hierzu müssen die Amplituden der gemessenen spektrometrischen Peaks festgestellt werden. Gemäß dieser Erfindung ist vorgesehen, dass aus den gemessenen Amplitudenwerten der Peaks des Kalibriergases und den bekannten Bruchstücksverteilungen der Peaks eines jeden Testgases nach Spektralposition und zugehörigem Amplitudenanteil Empfindlichkeitsfaktoren für die Amplituden der Peaks eines jeden Testgases bestimmt werden. Auf diese Weise wird das Lecksuchgerät nicht nur bezüglich der Spektralposition kalibriert, sondern auch bezüglich der zugehörigen Amplitudenwerte für die einzelnen Gase.

Zwischen zwei beim Kalibrieren gemessenen spektrometrischen Peaks können die Spektralpositionen durch lineare Interpolation festgelegt werden. Es besteht die Möglichkeit, Paare von Peaks bekannter Spektralpositionen miteinander zu kombinieren und jeweils zwischen den Peaks eines Paares eine lineare Interpolation durchzuführen. Außerhalb der von den Peaks bekannter Gase eingeschlossenen Bereiche kann die Festlegung der Spektralposition durch Extrapolation erfolgen. Dabei wird eine bei dem letzten (äußersten) Peak festgestellte Abweichung der Spektralposition im Extrapolationsbereich beibehalten. So wird beispielsweise ein Fehler von 0,2 bei einem der äußeren Peaks als additiver Fehler in den Extrapolationsbereich hinein fortgesetzt.

Nach der Erfindung wird ein Schnüffellecksucher in einem einzigen Kalibriervorgang für viele Gase kalibriert, wobei die Empfindlichkeiten der nicht zu den Kalibriergasen gehörenden Testgase aus bekannten Gaseigenschaften ermittelt werden.

Außer der Messung der Peakpositionen des Kalibriergases können auch die Spektralpositionen aus in der Luft enthaltenen Gasen ausgewertet werden. Beispielsweise enthält Luft einen geringen Anteil von Argon, das einen ausgeprägten Peak bei einer Massenzahl von 40 hat. Auf diese Weise kann Argon oder ein in der Luft enthaltenes anderes Gas zur Erstellung einer Skala der Spektralpositionen mitbenutzt werden. Allerdings eignen sich in der Umgebungsluft enthaltene Gase nicht für die Normierung der Amplituden zum Zwecke der Leckgrößenbestimmung.

Wenn ein Massenspektrometer Verwendung findet, wird die Massenachse als Spektralachse (X-Achse) dargestellt. Bei einem IR-Spektrometer gibt die Spektralachse die Wellenlänge an.

Im Folgenden wird unter Bezugnahme auf die Zeichnungen ein Ausführungsbeispiel der Erfindung näher erläutert.

Es zeigen:

Figur 1    ein schematisches Blockschaltbild eines Schnüffellecksuchers und

Figur 2    ein Beispiel eines Massenspektrums mit verschiedenen Peakpositionen detektierter Gase.

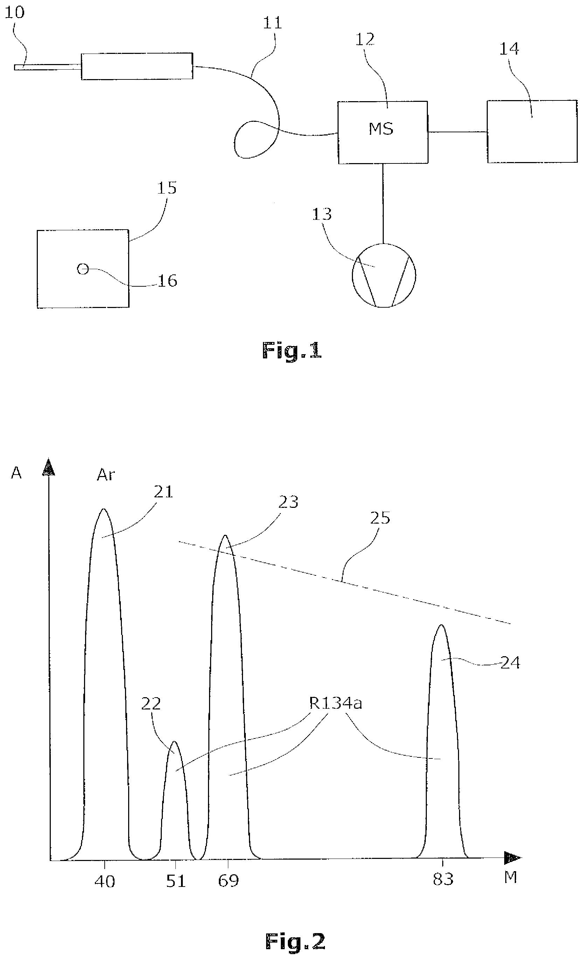

Der Schnüffellecksucher nach Figur 1 weist eine Schnüffelspitze 10 auf, durch die Gas angesaugt wird. Die Schnüffelspitze 10, die bei der Lecksuche von Hand geführt werden kann, ist mit einer flexiblen Schnüffelleitung 11 verbunden. Die Schnüffelleitung 11 führt zu einem Gastrenn-System 12, das imstande ist, angesaugte Gase selektiv zu erkennen. Das Gastrenn-System 12 ist beispielsweise ein Massenspektrometer MS, es kann aber auch aus einem anderen Gasdetektor bestehen, wie beispielsweise einem Infrarot-Gasdetektor. Das Gastrenn-System 12 ist mit einer Vakuumpumpe 13 verbunden, die das für den Betrieb des Massenspektrometers erforderliche Vakuum erzeugt und das angesaugte Gas wieder in die Umgebung fördert. In einer Auswerte- und Anzeigeeinheit 14 werden die Daten, die das Trenn-System 12 liefert, ausgewertet und dem Bediener zugänglich gemacht.

Der Schnüffellecksucher dient zum manuellen Suchen eines Lecks. Er kann beispielsweise in der Produktion von Klimageräten oder Kühlschränken eingesetzt werden, die mit einem Gas, beispielsweise einem Kältemittel, gefüllt werden. Das an einer Leckstelle austretende Gas wird mittels der Schnüffelspitze 10 durch das Gastrenn-System 12 hindurch abgesaugt. Bei einigen Geräten befindet sich das Gastrenn-System im Handgriff der Schnüffelspitze 10.

Es gibt verschiedene Arten von Gastrenn-Systemen. Einige können die Luft von den darin enthaltenen zusätzlichen Substanzen trennen und weiterhin auch zwischen den verschiedenen Gasanteilen des Leckgases unterscheiden Mit einem Massenspektrometer können die verschiedenen Kältemittel oder auch andere Gase separat detektiert und angezeigt werden. Bisher hat man für jedes Gas die Empfindlichkeit getrennt ermittelt.

Für die Kalibrierung des Schnüffellecksuchers verwendet man einen Behälter 15, der ein Testleck 16 bekannter Größe hat. Mit der Schnüffelspitze 10 wird an dem Testleck 16 geschnüffelt, um die Leckrate zu ermitteln und die Anzeige des Geräts auf das Testleck zu kalibrieren. Dabei stellt ein (nicht dargestellter) Temperatursensor die Temperatur des Kalibriergases fest. Die Leckrate wird auf eine Referenztemperatur, beispielsweise 20°C, umgerechnet.

Figur 2 zeigt ein Massenspektrum, das von dem Gastrenn-System 12 ermittelt wurde. Das dargestellte Massenspektrum ist dasjenige eines Kalibriergases. Als Kalibriergas wurde im vorliegenden Fall das Kältemittel R134a gewählt.

In Figur 2 ist auf der Abszisse die Massenzahl M aufgetragen und längs der Ordinate die Amplitude A des Massenspektrometers. Das Kalibriergas erzeugt mehrere spektrometrische Peaks im Massenspektrum. Zusätzlich enthält das angesaugte Gasgemisch Luft mit sämtlichen darin enthaltenen Gasanteilen.

In Figur 2 ist im Massenspektrum ein erster spektrometrischer Peak 21 bei einer Massenzahl von 40 vorhanden. Diese entspricht dem Gas Argon (Ar). Er geht auf den in der Luft enthaltenen Argon-Anteil zurück. Argon hat einen ausgeprägten und stabilen Peak und ist daher für eine Kalibrierung der Massenskala gut geeignet, auch wenn Argon in dem Kalibriergas nicht enthalten ist.

Das Kalibriergas, das in dem Behälter 15 enthalten ist, erzeugt bei dem dargestellten Ausführungsbeispiel die drei spektrometrischen Peaks 22, 23 und 24. Hiervon liegt der Peak 22 bei einer Massenzahl von 51, der Peak 23 bei einer Massenzahl von 69 und der Peak 24 bei einer Massenzahl von 83. Dies entspricht der Charakteristik des Gases R134a. Das Gas hat ferner eine charakteristische Bruchstückverteilung. Diese beträgt:

51/14%
69/72%

83/63%.

Die erste Zahl gibt jeweils die Massenzahl M an und die zweite Zahl die Höhe des Peaks, bezogen auf den maximalen vorkommenden Peak desselben Gases, Die Bruchstückverteilung gibt daher Aufschluss über die Massenzahlen der betreffenden Peaks und die Amplitudenanteile der einzelnen Peaks.

Erfindungsgemäß werden die Positionen der Peaks von Argon und dem Kalibriergas R134a, das aus dem Testleck 16 ausströmt, ermittelt und zur Festlegung der Massenzahlen 40, 69 und 83 benutzt. Der Peak 22 wird wegen seiner geringen Höhe nicht ausgewertet. Zwischen den Massenzahlen 40 und 69 werden die Massenzahlen durch lineare Interpolation festgelegt und zwischen den Massenzahlen 69 und 83 werden die Massenzahlen ebenfalls durch lineare Interpolation festgelegt. Auf diese Weise entsteht eine Massenzahl-Skala, in die jedes beliebige detektierte Gas eingeordnet werden kann. Der Massenbereich über 83 kann zu höheren Massen hin extrapoliert werden. Dies erfolgt beispielsweise durch Übernahme des bei der Massenzahl 83 ermittelten Massenfehlers, der zu den gefundenen Messwerten über 83 als Konstante additiv hinzugefügt wird.

In gleicher Weise wie die Kalibrierung der Massenzahl-Skala erfolgt auch die Kalibrierung der Amplitude auf die Größe des Testlecks 16. Alle stabilen vorhandenen Gaslinien des Kalibriergases können zur Bestimmung der Empfindlichkeit herangezogen werden. Allerdings ist bei dem oben beschriebenen Beispiel der Peak 21 von Argon hierfür ungeeignet, da Argon in der Luft enthalten ist und nicht in dem aus dem Testleck 16 austretenden Kalibriergas.

Für die Kalibrierung der Massenpositionen benötigt man nicht notwendigerweise ein Kalibriergas. Man kann die Massenpositionen auch unter Auswertung von in der Luft enthaltenen Einzelgasen durchführen. Allerdings enthält Luft wenig hierfür geeignete Gase. Für die Kalibrierung der Amplituden-Skala ist hingegen ein Testleck in jedem Fall erforderlich.

Die Kalibrierung der Amplituden erfolgt in der Weise, dass für das Kalibriergas der Fehler zwischen den gemessenen Peaks gegenüber der Bruchstückverteiiung gemittelt wird. Dies ist in Figur 2 mit der Geraden 25 dargestellt. Dabei ist angenommen, dass gegenüber der Bruchstückverteilung der Peak 23 zu hoch und der Peak 24 zu niedrig bewertet wurde. Es erfolgt dann eine Angleichung der Amplituden auf die Gerade 25, wobei der Amplitudenwert des Peaks 23 um den gleichen Wert erniedrigt wird wie der Amplitudenwert des Peaks 24 erhöht wird. Auch bei der Kalibrierung der Amplituden auf die Größe des Testlecks kann mit mindestens einem gemessenen Peak ein größerer Bereich von Massenzahlen kalibriert werden, indem für die einzelnen Gase Empfindlichkeitsfaktoren bestimmt werden.

Die Berechnung der Leckrate Lr eines Testgases, das vom Kalibriergas unterschiedlich ist, kann nach folgender Gleichung erfolgen:

$$Lr = GF \; x \; BF \; x \; IW \; x \; MF \qquad (1)$$

Hierbei sind

Lr = Leckrate
GF = Gerätefaktor
BF = Bruchstückfaktor (des jeweiligen Peaks)
IW = Ionisierungs-Wahrscheinlichkeit
MF = Materialfaktor

Der Gerätefaktor ist abhängig von dem jeweiligen Lecksuchgerät. Er gibt die Empfindlichkeit des Lecksuchgeräts an. Er bleibt für die verschiedenen Gase weitgehend konstant. Aus einer Tabelle können die Gasart abhängigen Faktoren BF, IW und MF entnommen werden. Derartige Tabellen sind zum Beispiel unter der folgenden Internet-Adresse verfügbar: http://www.inficongasanalyzers.com/pdf/Calculating_Partial_Pressures.pdf.

Für das Kalibriergas R134a (Gas 1) des vorliegenden Ausführungsbeispiels gilt

$$L_{F_1} = GF \; x \; BF_1 \; x \; IW_1 \; x \; MF_1 \qquad (2)$$

Hierin bezeichnet die Index-Ziffer 1 jeweils das Gas 1.
Aus Gleichung (2) ergibt sich der Gerätefaktor

$$GF = \frac{L_{F_1}}{BF_1 \; x \; IW_1 \; x \; MF_1} \qquad (3)$$

Für ein zweites Gas (Gas 2) gilt

$$Le_2 = GF \ x \ BF_2 \ x \ IW_2 \ x \ MF_2 \qquad (4)$$

Mit dieser Gleichung (4) und dem nun bekannten Gerätefaktor GF aus Gleichung (3), lassen sich alle Gase auf ein bekanntes Gas umrechnen. Um Fehler zu reduzieren, die durch Unterschiede der verschiedenen Massenspektrometer entstehen, kann man auch die Verhältnisse der Gase durch eine Messung prüfen.

## Patentansprüche

1. Verfahren zum Kalibrieren eines massenspektrometrischen Lecksuchers für unterschiedliche zu detektierende Testgase unter Verwendung eines vorzugsweise aus einem Testleck austretenden definierten Kalibriergases, bei welchem spektrometrische Peaks (21-24) des Kalibriergases bestimmt werden,
   **dadurch gekennzeichnet,**
   **dass** die gemessene Amplitude mindestens eines Peaks aus dem Kalibriergas mit einer bekannten Leckrate zur Bestimmung eines Gerätefaktors (GF) verwendet wird,
   **dass** aus bekannten Bruchstückfaktoren ($BF_1$) des Kalibriergases und den bekannten Bruchstückfaktoren ($BF_2$) des zu prüfenden Gases, wobei ein Bruchstückfaktor das Verhältnis aus Massenzahl M und relativer Höhe eines jeweiligen Peaks des Massenspektrums bezogen auf den maximalen vorkommenden Peak desselben Gases angibt, sowie des Gerätefaktors (GF), die Kalibrierung für dieses zu prüfende Gas bestimmt wird und
   **dass** zwischen zwei beim Kalibrieren gemessenen Peaks mit bekannten Spektralpositionen bzw. zwischen dem Nullpunkt der Spektralachse und einem beim Kalibrieren gemessenen Peak mit bekannter Spektralposition, die Spektralpositionen durch lineare Interpolation festgelegt werden.

2. Verfahren nach Anspruch 1, **dadurch gekennzeichnet, dass** aus dem Kalibriergas oder aus in der Luft enthaltenen Gasen (Ar) die Spektralposition mindestens eines definierten Peaks bestimmt wird.

3. Verfahren nach Anspruch 1 oder 2, **dadurch gekennzeichnet, dass** der Nullpunkt der Spektralposition als bekannter Fixpunkt einbezogen wird.

4. Verfahren nach einem der Ansprüche 1-3, **dadurch gekennzeichnet, dass** Peaks des zu prüfenden Gases anhand ihrer bekannten Spektralpositionen, in der Spektralachse durch Interpolation bzw. Extrapolation des bzw. der gemessenen Peaks und/oder des Nullpunkts der Massenachse festgelegt werden.

5. Verfahren nach einem der Ansprüche 1-3, **dadurch gekennzeichnet, dass** in einem außerhalb des Bereichs gemessener Peaks liegenden Extrapolationsbereich die Spektralpositionen in der Weise festgelegt werden, dass eine bei dem letzten Peak festgestellte Abweichung der Spektralposition im Extrapolationsbereich beibehalten wird.

6. Verfahren nach einem der Ansprüche 1-5, **dadurch gekennzeichnet, dass** bei der Messung der Amplituden der Peaks des Testlecks eine von den bekannten Bruchstückfaktoren abweichende Amplitudenverteilung durch Interpolation bzw. Extrapolation über die Spektralachse für die anderen zu messenden Gase korrigiert wird.

## Claims

1. A method for calibrating a mass spectrometric leak detector for different test gases to be detected using a defined calibration gas preferably escaping through a test leak, where spectrometric peaks (21-24) of the calibrating gas are determined,
   **characterized in that**
   the measured amplitude of at least one peak of a calibrating gas with a known leak rate is used for determining a device factor (GF),
   from known fraction factors ($BF_1$) of the calibrating gas and the known fraction factors ($BF_2$) of the gas under test, wherein a fraction factor states the ratio of the mass number M and the relative height of a respective peak of the mass spectrum in relation to the maximum occurring peak of the same gas, as well as from said device factor (GF), the calibration for the gas under test is determined, and

between two peaks measured during calibration and having known spectral positions and between the zero point of the spectral axis and a peak measured during calibration and having a known spectral position, respectively, the spectral positions are determined by a linear interpolation.

2. The method according to claim 1, **characterized in that** from the calibrating gas or from gases (Ar) contained in the air the spectral position of at least one defined peak is determined.

3. The method according to claim 1 or 2, **characterized in that** the zero point of the spectral position is used as a known fixed point.

4. The method according to any one of claims 1-3, **characterized in that** peaks of the gas under test are determined on the basis of their known spectral positions in the spectral axis by interpolation and/or extrapolation of the measured peak and/or peaks and/or the zero point of the mass axis.

5. The method according to any one of claims 1-3, **characterized in that** in an extrapolation range lying outside the range of measured peaks the spectral positions are determined **in that** a deviation of the spectral position detected at the last peak is retained in the extrapolation range.

6. The method according to any one of claims 1-5, **characterized in that** during measurement of the amplitudes of the peaks of the test leak an amplitude distribution deviating from the known fraction factors is corrected for the other gases to be measured by interpolation and/or extrapolation via the spectral axis.


**Revendications**

1. Procédé de calibration d'un détecteur de fuites d'un spectromètre de masse, pour différents gaz de tests à détecter en utilisant un gaz de calibration défini s'échappant par une fuite étalon, au moyen duquel les pics spectrométriques (21-24) du gaz de calibration sont déterminés, **caractérisé en ce que** l'amplitude mesurée d'au moins un pic du gaz de calibration est utilisée avec un taux de fuite connu pour la détermination d'un facteur d'appareil (GF), **en ce que** la calibration pour ce gaz à vérifier est déterminée à partir des facteurs de fragmentation connus ($BF_1$) du gaz de calibration et des facteurs de fragmentation connus ($BF_2$) du gaz à vérifier, dans lequel un facteur de fragmentation fournit le ratio du nombre de masse M et de la hauteur relative d'un pic du spectre de masse par rapport au pic maximal de ce même gaz, de même que le facteur d'appareil (GF), et **en ce qu'**entre deux pics mesurés lors de la calibration avec des positions spectrales connues ou entre le point de référence de l'axe spectral et un pic mesuré lors de la calibration avec une position spectrale connue, les positions spectrales sont déterminées par interpolation linéaire.

2. Procédé selon la revendication 1, **caractérisé en ce que** la position spectrale d'au moins un pic défini est déterminée à partir du gaz de calibration ou à partir de gaz (Ar) contenus dans l'air.

3. Procédé selon la revendication 1 ou 2, **caractérisé en ce que** le point de référence de la position spectrale est inclus comme point fixe connu.

4. Procédé selon l'une des revendications 1-3, **caractérisé en ce que** les pics du gaz à vérifier, grâce à leurs positions spectrales connues, sont déterminés dans l'axe spectral par interpolation ou extrapolation des pics mesurés ou du point de référence de l'axe des masses.

5. Procédé selon l'une des revendications 1-3, **caractérisé en ce que** dans un intervalle d'extrapolation situé en dehors de l'intervalle des pics mesurés, les positions spectrales sont fixées de telle sorte qu'une déviation de la position spectrale déterminée par le dernier pic est maintenue dans l'intervalle d'extrapolation.

6. Procédé selon l'une des revendications 1-5, **caractérisé en ce que** lors de la mesure des amplitudes des pics de la fuite étalon, une distribution d'amplitude déviant des facteurs de fragmentation connus est corrigée par interpolation ou extrapolation sur l'axe spectral pour les autres gaz à mesurer.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6263724 A
- JP 06222044 A
- JP 05217549 A

**In der Beschreibung aufgeführte Nicht-Patentliteratur**

- **WALTER UMRATH ; HERMANN ADAM et al.** *Grundlagen der Vakuumtechnik,* Marz 1997